# EUROPEAN PATENT APPLICATION

(11) **EP 3 487 185 A1**
(43) Date of publication of application: **22.05.2019**
(21) Application number: 17827175.5
(22) Date of filing: 23.03.2017
(51) Int. Cl.: H04R 1/06, G10K 15/02, H04R 3/12, H04S 7/00

(54) **WIRELESS AUDIO SYSTEM, WIRELESS SPEAKER, AND COMPUTER READABLE PROGRAM**

(30) Priority: 13.07.2016 JP 2016138978
(71) Applicant: D&M Holdings Inc., Kawasaki-shi Kanagawa 210-8569 (JP)
(72) Inventor: YAZAWA Hiroyuki, Kawasaki-shi Kanagawa 210-8569 (JP)
(74) Representative: Mewburn Ellis LLP
(86) International application number: PCT/JP2017/011623
(87) International publication number: WO 2018/012041

(57) **Abstract**

Abstract: [Problem] To reduce deviation in reproduction timings among a plurality of wireless speakers in case where audio data about the same piece of music is reproduced by use of the wireless speakers. [Solution] In a wireless audio system 1, audio data about the same piece of music reproduced while any one of a plurality of wireless speakers 2-1 to 2-3 serves as a master and the remaining speakers serve as slaves. The master downloads the audio data about the piece of music from a media server 5, wirelessly transmits the downloaded audio data to the slaves, and reproduces and outputs the audio data. Here, the master reproduces the audio data downloaded from the media server 5 after buffering the audio data for a prescribed time, and thereby, makes a start timing of reproducing the audio data coincident with start timings of reproducing the data in the slaves.

## Description

### Technical Field

The present invention relates to a technology for audio reproduction control in a wireless audio system using a plurality of wireless speakers.

### Background Art

In Patent Literature 1, there is disclosed a wireless audio system including a plurality of wireless speakers, which are sorted into a plurality of groups, and capable of reproducing audio data separately for each group. In this wireless audio system, arbitration is conducted for each group by the plurality of wireless speakers belonging to the group to select one wireless speaker out of the wireless speakers belonging to the group, and the selected wireless speaker serves as a master (group leader) . Audio data of the same tune can be reproduced on the plurality of wireless speakers belonging to the same group by downloading the audio data from a media server or other sources to the master, and then transmitting the audio data from the master to the other wireless speakers belonging to the same group as that of the master.

### Citation List

### Patent Literature

[PTL 1] US 7987294 B2

### Summary of Invention

### Technical Problem

In the wireless audio system described in Patent Literature 1, there is a problem in reproducing audio data of the same tune on the plurality of wireless speakers belonging to the same group.

The problem is that the timing of reproducing audio data falls out of synchronization between the master and the slaves because the slaves are delayed from the master by an amount in relation to the length of time required to process transmission/reception of the audio data between the master and the slaves.

In particular, in the case of reproducing high quality audio data that requires a broader band than the wireless communication band of the wireless speakers, for example, high resolution audio, the master compresses the high resolution audio to a band equal to or narrower than the wireless communication band of the wireless speakers before transmitting the audio to the slaves, and the slaves decompress the compressed audio received from the master and reproduce the decompressed audio. The gap in audio data reproduction timing between the master and the slaves accordingly increases when the compression/decompression processing takes time.

The present invention has been made in view of the circumstance described above, and an object of the present invention is therefore to reduce a gap in reproduction timing between wireless speakers when audio data of the same tune is reproduced on a plurality of wireless speakers.

### Solution to Problem

To attain the object described above, a first aspect of the present invention involves providing a buffer in a master and buffering audio data in the buffer before reproducing the audio data, to thereby delay reproduction start timing in the master by a length of time required for slaves to receive and start reproducing the audio data after the transmission of the audio data from the master.

For example, according to the first aspect of the present invention, there is provided a wireless audio system, which has a plurality of wireless speakers, and has a configuration in which one of the plurality of speakers serves as a master and rest of the speakers each serve as a slave to reproduce audio data, wherein the master includes: audio data obtaining means for obtaining audio data to be reproduced; audio data transmission means for wirelessly transmitting the audio data obtained by the audio data obtaining means to the slave; buffer means for buffering the audio data for a given length of time, the audio data obtained by the audio data obtaining means; and master-side reproduction output means for reproducing and outputting the audio data buffered for the given length of time by the buffer means, wherein the slave includes: audio data reception means for receiving the audio data transmitted wirelessly from the master; and slave-side reproduction output means for reproducing and outputting the audio data received by the audio data reception means, and wherein the buffer means is configured to buffer the audio data for the given length of time, which is a time required for the reception of the audio data by the audio data reception means and for the output of the audio data to the slave-side reproduction output means after the wireless transmission of the audio data by the audio data transmission means.

A second aspect of the present invention involves synchronizing a system clock of one wireless speaker with a system clock of another wireless speaker. The master transmits a reproduction command, which is accompanied by the specification of a reproduction start time, as well as audio data to the slaves. The master starts reproducing the audio data at the reproduction start time specified by the reproduction command. The slaves receive the audio data from the master along with the reproduction command. The slaves start reproducing the audio data at the reproduction start time specified by the reproduction command.

For example, according to the second aspect of the present invention, there is provided a wireless audio system, which has a plurality of wireless speakers, and has a configuration in which one of the plurality of speakers serves as a master and rest of the speakers each serve as a slave to reproduce audio data, wherein each of the plurality of wireless speakers includes synchronization means for synchronizing a system clock with a clock of a time server, wherein the master includes : audio data obtaining means for obtaining audio data to be reproduced; audio data transmission means for wirelessly transmitting the audio data obtained by the audio data obtaining means to the slave; reproduction command transmission means for wirelessly transmitting, to the slave, a reproduction command accompanied by specification of a reproduction start time at which reproduction of the audio data obtained by the audio data obtaining is to be started; and master-side reproduction output means for starting reproduction and output of the audio data obtained by the audio data obtaining means, at the reproduction start time specified by the reproduction command, and wherein the slave includes: audio data reception means for receiving the audio data transmitted wirelessly from the master; reproduction command reception means for receiving the reproduction command transmitted wirelessly from the master; and slave-side reproduction output means for starting reproduction and output of the audio data received by the audio data reception means, at the reproduction start time specified by the reproduction command, which is received by the reproduction command reception means.

### Advantageous Effects of Invention

In the first aspect of the present invention, reproduction start timing in the master is delayed by a length of time required for the slaves to receive and start reproducing audio data after the transmission of the audio data from the master by allowing the master to reproduce the audio data after buffering the audio data. In the second aspect of the present invention, the master transmits a reproduction command accompanied by the specification of a reproduction start time to the slaves while the system clocks of the wireless speakers are synchronized with one another. The master and the slaves then start reproducing audio data at the reproduction start time specified by the reproduction command. According to the present invention, a gap in reproduction start timing between the master and the slaves can thus be reduced and a gap in reproduction timing between wireless speakers can accordingly be reduced when audio data of the same tune is to be reproduced on a plurality of wireless speakers.

### Brief Description of Drawings

FIG. 1 is a schematic block diagram of a wireless audio system 1 according to a first embodiment of the present invention.
FIG. 2 is a schematic function block diagram of one of wireless speakers 2.
FIG. 3 is a diagram for illustrating the operation of one of the wireless speakers 2 that is set to a slave operation mode.
FIG. 4 is a diagram for illustrating how one of the wireless speakers 2 that is set to a master operation mode operates when low resolution audio is downloaded from a media server 5.
FIG. 5 is a diagram for illustrating how one of the wireless speakers 2 that is set to the master operation mode operates when high resolution audio is downloaded from the media server 5.
FIG. 6 is a schematic function block diagram of one of wireless speakers 2a.
FIG. 7 is a diagram for illustrating the operation of one of the wireless speakers 2a that is set to a slave operation mode.
FIG. 8 is a diagram for illustrating how one of the wireless speakers 2a that is set to a master operation mode operates when low resolution audio is downloaded from the media server 5.
FIG. 9 is a diagram for illustrating how one of the wireless speakers 2 that is set to the master operation mode operates when high resolution audio is downloaded from the media server 5.

### Description of Embodiments

Now, embodiments of the present invention are described with reference to the drawings.

### [First Embodiment]

A first embodiment of the present invention is described first.

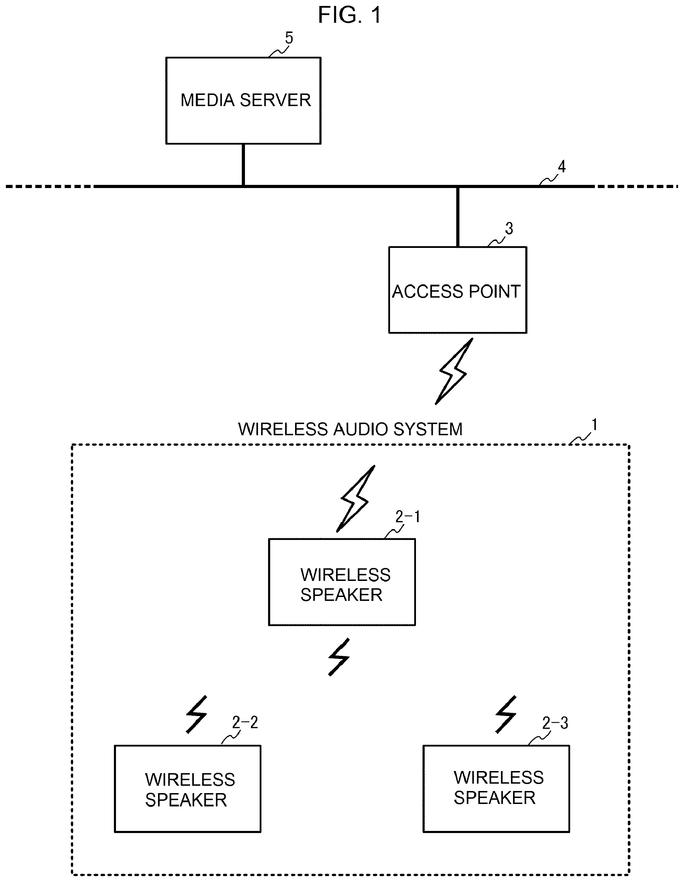

FIG. 1 is a schematic block diagram of a wireless audio system 1 according to the first embodiment of the present invention.

As illustrated in FIG. 1, the wireless audio system 1 according to the first embodiment includes wireless speakers 2-1 to 2-3 (hereinafter may simply be referred to as "wireless speakers 2"), and is connected to a media server 5 via an access point 3 and a network 4, which is a WAN, a LAN, or the like. While a case in which the wireless audio system 1 includes three wireless speakers 2 is illustrated in FIG. 1 as an example, the wireless audio system 1 may include any number of wireless speakers 2 greater than one.

The media server 5 provides audio data of tunes to the wireless audio system 1. The media server 5 in this case provides, in addition to what is called low resolution audio data, high resolution audio data higher in quality (requiring a broader band) than low resolution audio data. Low resolution audio data is, for example, lossy compressed data compressed by Advanced Audio Coding (AAC) or other methods, and Compact Disc Digital Audio (CD-DA) and similar uncompressed data. High resolution audio data is, for example, losslessly compressed data compressed by Free Lossless Audio Codec (FLAC) or other methods, and FLAC Uncompressed and similar uncompressed data.

The wireless audio system 1 assigns one of the plurality of wireless speakers 2-1 to 2-3 as a master and the rest as slaves to reproduce audio data of the same tune on the master and the slaves . In the example illustrated in FIG. 1, the wireless speaker 2-1 is the master and the wireless speakers 2-2 and 2-3 are the slaves.

The wireless speaker 2-1, which serves as the master in FIG. 1, accesses the media server 5 via the access point 3 and the network 4 to download audio data of a tune from the media server 5. The wireless speaker 2-1 wirelessly transmits the downloaded audio data to the wireless speakers 2-2 and 2-3, which serve as the slaves, and reproduces and outputs the audio data as well. The wireless speakers 2-2 and 2-3 serving as the slaves receive the audio data wirelessly transmitted from the other wireless speaker 2-1, which is a wireless speaker serving as the master, and reproduce and output the received audio data.

The wireless speaker 2-1 serving as the master reproduces the audio data downloaded from the media server 5 after buffering the audio data for a given length of time, to thereby match its timing of starting reproducing the audio data with the audio data reproduction start timing of the wireless speakers 2-2 and 2-3 serving as the slaves.

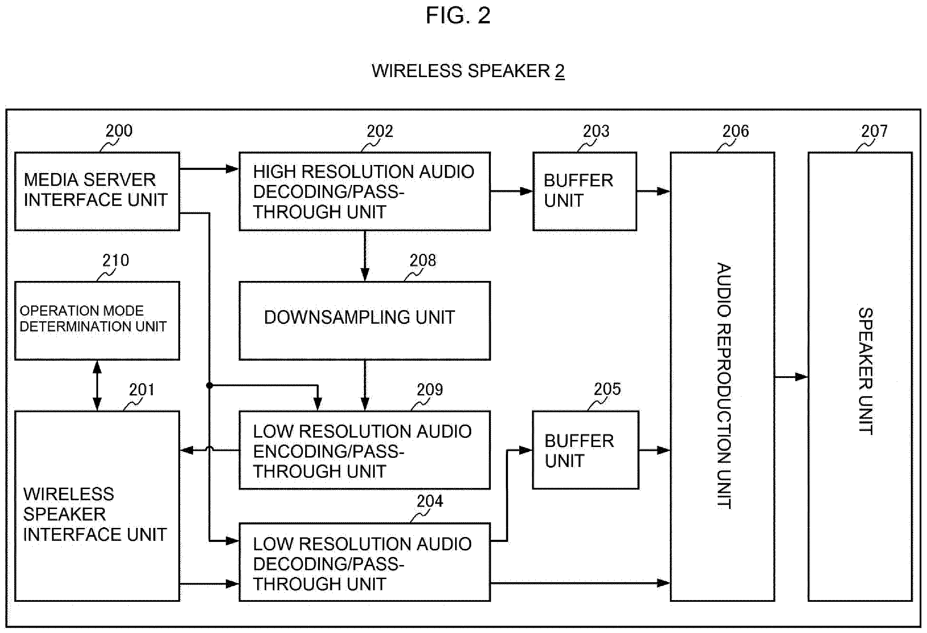

FIG. 2 is a schematic function block diagram of one of the wireless speakers 2.

The function configuration of the wireless speaker 2 illustrated in FIG. 2 is implemented by, for example, allowing a CPU to load a given program from an auxiliary storage device onto a memory and execute the program on a computer that includes the CPU, the memory, the auxiliary storage device, which is a flash memory, a hard disk drive, or the like, a communication device, which is an NIC, a wireless LAN adapter, a Bluetooth (trademark) adapter, or the like, and a speaker.

The wireless speaker 2 includes, as illustrated in FIG. 2, a media server interface unit 200, a wireless speaker interface unit 201, a high resolution audio decoding/pass-through unit 202, a buffer unit 203, a low resolution audio decoding/pass-through unit 204, a buffer unit 205, an audio reproduction unit 206, a speaker unit 207, a downsampling unit 208, a low resolution audio encoding/pass-through unit 209, and an operation mode determination unit 210.

The media server interface unit 200 is an interface for holding communication, via the access point 3, by wireless communication, wired LAN communication, or the like, to and from the media server 5, which is connected to the network 4.

The wireless speaker interface unit 201 is an interface for holding communication to and from other wireless speakers 2 by wireless communication, for example, Bluetooth (trademark) communication or wireless LAN communication.

The high resolution audio decoding/pass-through unit 202 decodes high resolution audio data downloaded from the media server 5 via the media server interface unit 200, or allows the downloaded high resolution audio data to pass through, and outputs the high resolution audio data to the buffer unit 203 and the downsampling unit 208.

The buffer unit 203 buffers high resolution audio data input from the high resolution audio decoding/pass-through unit 202 for a given length of time, and then outputs the high resolution audio data to the audio reproduction unit 206. The buffering time of the buffer unit 203 is described later.

The low resolution audio decoding/pass-through unit 204 decodes low resolution audio data downloaded from the media server 5 via the media server interface unit 200, or low resolution audio data received from another wireless speaker 2 via the wireless speaker interface unit 201, or allows the downloaded or received low resolution audio data to pass through, and outputs the low resolution audio data to the buffer unit 205 or the audio reproduction unit 206.

The buffer unit 205 buffers low resolution audio data input from the low resolution audio decoding/pass-through unit 204 for a given length of time, and then outputs the low resolution audio data to the audio reproduction unit 206. The buffering time of the buffer unit 205 is described later.

The audio reproduction unit 206 reproduces one of high resolution audio data input from the buffer unit 203, low resolution audio data input from the buffer unit 205, and low resolution audio data input from the low resolution audio decoding/pass-through unit 204, and outputs a reproduction signal as a sound from the speaker unit 207.

The downsampling unit 208 downsamples high resolution audio data input from the high resolution audio decoding/pass-through unit 202 to convert the high resolution audio data into low resolution audio data (uncompressed data, for example, CD-DA), and outputs the low resolution audio data to the low resolution audio encoding/pass-through unit 209.

The low resolution audio encoding/pass-through unit 209 encodes low resolution audio data input from the downsampling unit 208, or low resolution audio data downloaded from the media server 5 via the media server interface unit 200, or allows the input or downloaded low resolution audio data to pass through, and transmits the low resolution audio data from the wireless speaker interface unit 201 to other wireless speakers 2.

The operation mode determination unit 210 determines the operation mode of its own wireless speaker 2 so that one of the wireless speakers 2-1 to 2-3 included in the wireless audio system 1 serves as a master while the rest serve as slaves.

For example, the operation mode determination unit 210 monitors for a master notification via the wireless speaker interface unit 201. When a master notification is received from another wireless speaker 2 via the wireless speaker interface unit 201 for every given length of time, the operation mode determination unit 210 registers the wireless speaker 2 that is the sender of the master notification as a master, and determines the operation mode of its own wireless speaker 2 as a slave mode. The operation mode determination unit 210 then transmits a slave notification via the wireless speaker interface unit 201 to the wireless speaker 2 registered as the master.

When no master notification is received within the given length of time from another wireless speaker 2 via the wireless speaker interface unit 201, the operation mode determination unit 210 further waits for the elapse of an arbitration time, which is set randomly. When a master notification is received within the arbitration time from another wireless speaker 2, the operation mode determination unit 210 registers the wireless speaker 2 that is the sender of the master notification as a master, and determines the operation mode of its own wireless speaker 2 as a slave mode. The operation mode determination unit 210 then transmits a slave notification via the wireless speaker interface unit 201 to the wireless speaker 2 registered as the master. When no master notification is received within the arbitration time from another wireless speaker 2, on the other hand, the operation mode determination unit 210 determines the operation mode of its own wireless speaker 2 as a master mode. The operation mode determination unit 210 then broadcasts a master notification to the other wireless speakers 2 from the wireless speaker interface unit 201 for every given length of time and, when a slave notification is received from another wireless speaker 2 via the wireless speaker interface unit 201, registers the wireless speaker 2 that is the sender of the slave notification as a slave.

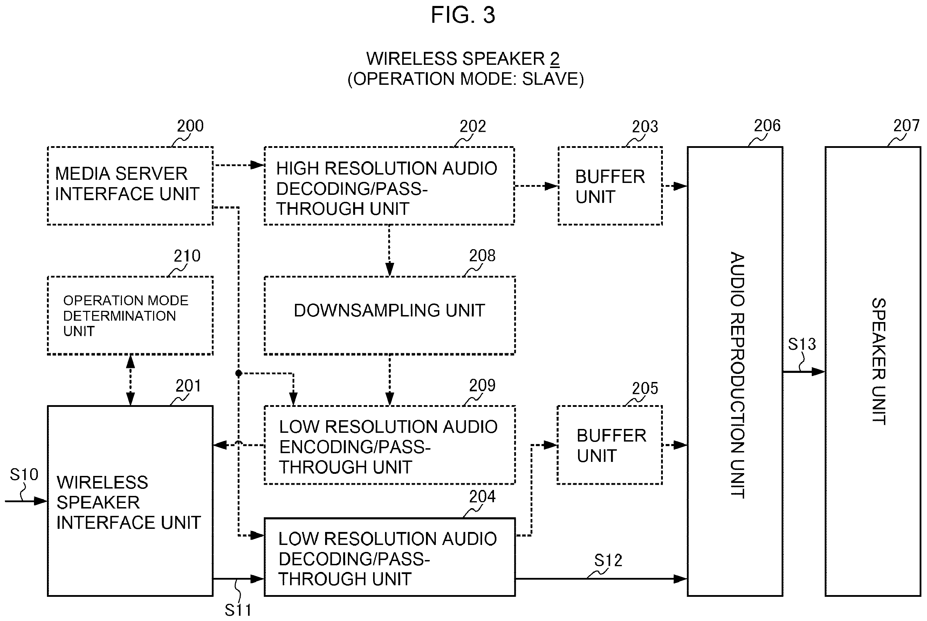

FIG. 3 is a diagram for illustrating the operation of one of the wireless speakers 2 that is set to a slave operation mode.

First, the wireless speaker interface unit 201 receives low resolution audio data from the wireless speaker 2 that is set as a master (S10) . The wireless speaker interface unit 201 outputs the received low resolution audio data to the low resolution audio decoding/pass-through unit 204 (S11).

Next, the low resolution audio decoding/pass-through unit 204 decodes the low resolution audio data input from the wireless speaker interface unit 201, or allows the input low resolution audio data to pass through, and outputs the low resolution audio data to the audio reproduction unit 206 (S12).

Specifically, when the low resolution audio data input from the wireless speaker interface unit 201 is lossy compressed data compressed by AAC or other methods, the low resolution audio decoding/pass-through unit 204 decodes the compressed data and outputs the decoded low resolution audio data to the audio reproduction unit 206. When the input low resolution audio data is CD-DA or similar uncompressed data, the low resolution audio decoding/pass-through unit 204 allows the input low resolution audio data to pass through, and outputs the low resolution audio data to the audio reproduction unit 206.

Next, the audio reproduction unit 206 reproduces the low resolution audio data input from the low resolution audio decoding/pass-through unit 204, and outputs a reproduction signal of the low resolution audio data from the speaker unit 207 (S13).

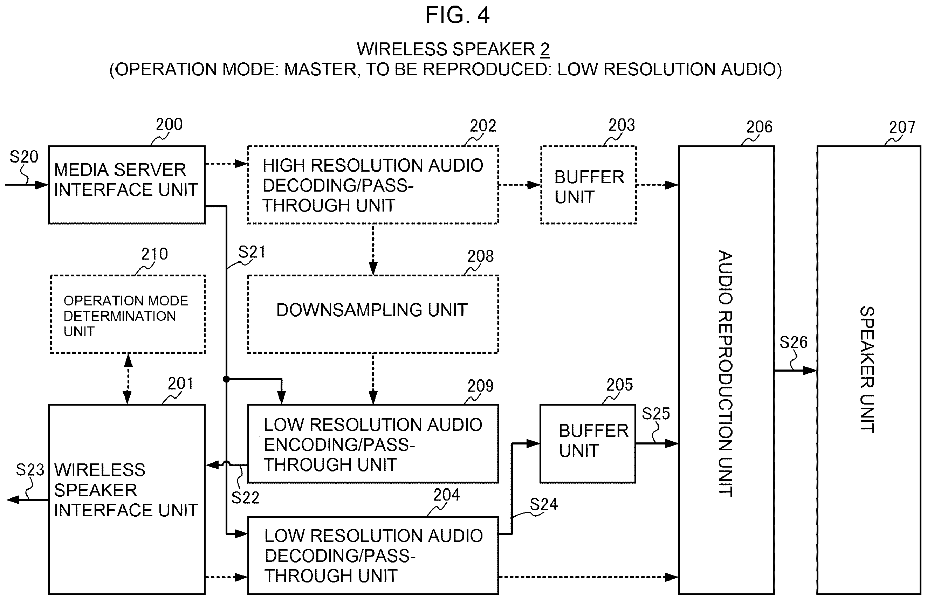

FIG. 4 is a diagram for illustrating how one of the wireless speakers 2 that is set to a master operation mode operates when low resolution audio is downloaded from the media server 5.

First, the media server interface unit 200 downloads low resolution audio data from the media server 5 via the access point 3 and the network 4 (S20). The media server interface unit 200 then outputs the downloaded low resolution audio data to the low resolution audio decoding/pass-through unit 204 and the low resolution audio encoding/pass-through unit 209 (S21).

Next, the low resolution audio encoding/pass-through unit 209 encodes the low resolution audio data input from the media server interface unit 200, or allows the input low resolution audio data to pass through, and outputs the low resolution audio data to the wireless speaker interface unit 201 (S22).

Specifically, when the low resolution audio data input from the media server interface unit 200 is CD-DA or similar uncompressed data and encoding is chosen by an operator, encoding is performed to turn the low resolution audio data into lossy compressed data compressed by AAC or other methods, and outputs the encoded audio data to the wireless speaker interface unit 201. On the other hand, when the low resolution audio data input from the media server interface unit 200 is lossy compressed data compressed by AAC or other methods, or when pass-through is chosen by the operator, the low resolution audio data is passed through and output to the wireless speaker interface unit 201.

Next, the wireless speaker interface unit 201 transmits the low resolution audio data input from the low resolution audio encoding/pass-through unit 209 to the other wireless speakers 2 registered as slaves in the operation mode determination unit 210 (S23) .

The low resolution audio decoding/pass-through unit 204 decodes the low resolution audio data input from the media server interface unit 200, or allows the input low resolution audio data to pass through, and outputs the low resolution audio data to the buffer unit 205 (S24).

Specifically, when the low resolution audio data input from the media server interface unit 200 is lossy compressed data compressed by AAC or other methods, the low resolution audio decoding/pass-through unit 204 decodes the low resolution audio data and outputs the decoded audio data to the buffer unit 205. When the input low resolution audio data is CD-DA or similar uncompressed data, the low resolution audio decoding/pass-through unit 204 allows the low resolution audio data to pass through and outputs the low resolution audio data to the buffer unit 205.

Next, the buffer unit 205 buffers the low resolution audio data input from the low resolution audio decoding/pass-through unit 204 for a given length of time, and then outputs the low resolution audio data to the audio reproduction unit 206 (S25).

The buffering time (given length of time) is set so that reproduction start timing at which the wireless speaker 2 set to the master operation mode starts reproducing audio data of a tune matches reproduction timing at which the wireless speakers 2 set to the slave operation mode start reproducing the audio data of the same tune.

Specifically, the buffering time is set to the sum of a time required for the preparation and transmission of low resolution audio data in the wireless speaker 2 set to the master operation mode (the sum of an encoding processing time when encoding is performed in the low resolution audio encoding/pass-through unit 209, and a transmission processing time in the wireless speaker interface unit 201) and a time required for the reception of the low resolution audio data in the wireless speakers 2 set to the slave operation mode (a reception processing time in the wireless speaker interface unit 201).

Next, the audio reproduction unit 206 reproduces the low resolution audio data input from the buffer unit 205, and outputs a reproduction signal of the low resolution audio data from the speaker unit 207 (S26).

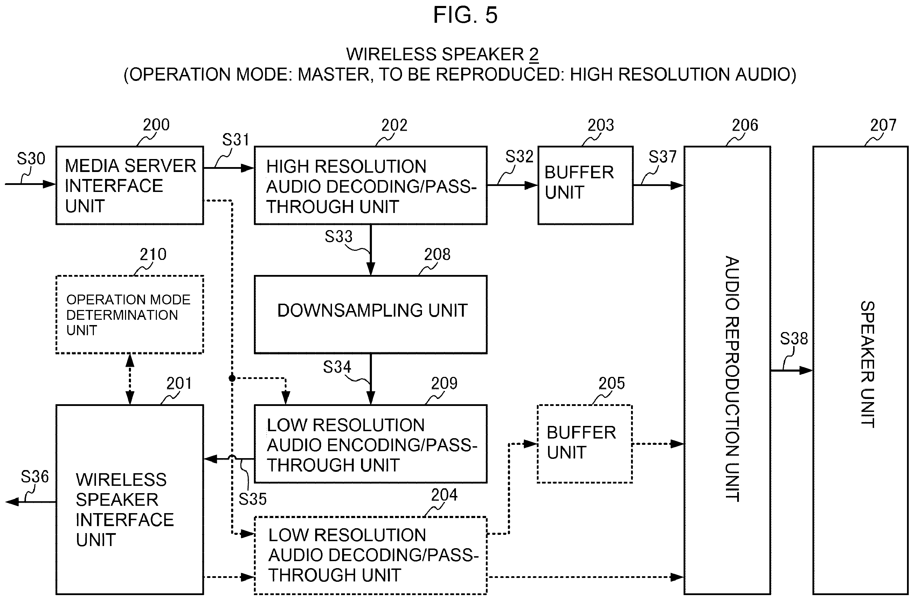

FIG. 5 is a diagram for illustrating how one of the wireless speakers 2 that is set to a master operation mode operates when high resolution audio is downloaded from the media server 5.

First, the media server interface unit 200 downloads high resolution audio data from the media server 5 via the access point 3 and the network 4 (S30). The media server interface unit 200 then outputs the downloaded high resolution audio data to the high resolution audio decoding/pass-through unit 202 (S31).

Next, the high resolution audio decoding/pass-through unit 202 decodes the high resolution audio data input from the media server interface unit 200, or allows the input high resolution audio data to pass through, and outputs the high resolution audio data to the buffer unit 203 and the downsampling unit 208 (S32 and S33) .

Specifically, when the high resolution audio data input from the media server interface unit 200 is losslessly compressed data compressed by FLAC or other methods, the high resolution audio decoding/pass-through unit 202 decodes the high resolution audio data, and outputs the decoded audio data to the buffer unit 203 and the downsampling unit 208. When the input high resolution audio data is FLAC Uncompressed or similar uncompressed data, the high resolution audio decoding/pass-through unit 202 allows the high resolution audio data to pass through and outputs the high resolution audio data to the buffer unit 203 and the downsampling unit 208.

Next, the downsampling unit 208 downsamples the high resolution audio data input from the high resolution audio decoding/pass-through unit 202 to convert the input data into low resolution audio data (CD-DA or similar uncompressed data), and outputs the low resolution audio data to the low resolution audio encoding/pass-through unit 209 (S34).

Next, the low resolution audio encoding/pass-through unit 209 encodes the low resolution audio data input from the downsampling unit 208, or allows the input low resolution audio data to pass through, and outputs the low resolution audio data to the wireless speaker interface unit 201 (S35).

Specifically, when encoding is chosen by the operator, the low resolution audio encoding/pass-through unit 209 performs encoding to turn the low resolution audio data (CD-DA or similar uncompressed data) input from the downsampling unit 208 into lossy compressed data compressed by AAC or other methods, and outputs the encoded audio data to the wireless speaker interface unit 201. When pass-through is chosen by the operator, on the other hand, the low resolution audio encoding/pass-through unit 209 allows the input low resolution audio data to pass through and outputs the low resolution audio data to the wireless speaker interface unit 201.

Next, the wireless speaker interface unit 201 transmits the low resolution audio data input from the low resolution audio encoding/pass-through unit 209 to the other wireless speakers 2 registered as slaves in the operation mode determination unit 210 (S36) .

Further, the buffer unit 203 buffers the high resolution audio data input from the high resolution audio decoding/pass-through unit 202 for a given length of time, and then outputs the high resolution audio data to the audio reproduction unit 206 (S37).

The buffering time (given length of time) is set so that reproduction start timing at which the wireless speaker 2 set to the master operation mode starts reproducing audio data of a tune matches reproduction timing at which the wireless speakers 2 set to the slave operation mode start reproducing the audio data of the same tune.

Specifically, the buffering time is set to the sum of a time required for the preparation and transmission of low resolution audio data in the wireless speaker 2 set to the master operation mode (the sum of a downsampling processing time in the downsampling unit 208, an encoding processing time when encoding is performed in the low resolution audio encoding/pass-through unit 209, and a transmission processing time in the wireless speaker interface unit 201) and a time required for the reception and reproduction preparation of the low resolution audio data in the wireless speakers 2 set to the slave operation mode (the sum of a reception processing time in the wireless speaker interface unit 201 and a decoding processing time when decoding is performed in the low resolution audio decoding/pass-through unit 204).

Next, the audio reproduction unit 206 reproduces the high resolution audio data input from the buffer unit 203, and outputs a reproduction signal of the high resolution audio data from the speaker unit 207 (S38).

This concludes the description of the first embodiment of the present invention.

In the first embodiment, reproduction start timing in the wireless speaker 2 that is set to the master operation mode is delayed by buffering audio data before reproducing the audio data in the wireless speaker 2 that is set as the master, by a length of time required for the wireless speakers 2 that are set to the slave operation mode to receive and start reproducing the audio data after the transmission of the audio data from the wireless speaker 2 that is set as the master.

According to the first embodiment, a gap in reproduction start timing between the wireless speaker 2 set as the master and the wireless speakers 2 set as the slaves can thus be reduced, thereby reducing a gap in reproduction timing between the wireless speakers 2 when audio data of the same tune is to be reproduced on a plurality of wireless speakers 2.

### [Second Embodiment]

A second embodiment of the present invention is described next.

A wireless audio system 1a according to the second embodiment differs from the wireless audio system 1 according to the first embodiment, which is illustrated in FIG. 1, in that wireless speakers 2a-1 to 2a-3 (hereinafter may simply be referred to as "wireless speakers 2a") are used in place of the wireless speakers 2-1 to 2-3.

The wireless audio system 1a assigns one of the plurality of wireless speakers 2a-1 to 2a-3 as a master and the rest as slaves to reproduce audio data of the same tune on the master and the slaves .

The wireless speaker 2 serving as the master wirelessly transmits a reference clock signal. The wireless speaker 2 serving as the master also accesses the media server 5 via the access point 3 and the network 4 to download audio data of a tune. The wireless speaker 2 serving as the master wirelessly transmits the downloaded audio data, along with a reproduction command accompanied by the specification of a reproduction start time of the audio data, to the other wireless speakers 2a serving as the slaves. When the reproduction start time specified by the reproduction command arrives, the wireless speaker 2 serving as the master starts reproducing and outputs the audio data.

The wireless speakers 2a serving as the slaves synchronize their own system clocks with the reference clock signal, which is transmitted wirelessly from the other wireless speaker 2a serving as the master. The wireless speakers 2a serving as the slaves also receive the audio data and the reproduction command from the other wireless speaker 2a serving as the master. When the reproduction start time specified by the reproduction command arrives, the wireless speakers 2a serving as the slaves start reproducing and output the audio data.

The timing at which the wireless speaker 2a serving as the master starts reproducing the audio data and the timing at which the wireless speakers 2a serving as the slaves start reproducing the audio data are matched in this manner.

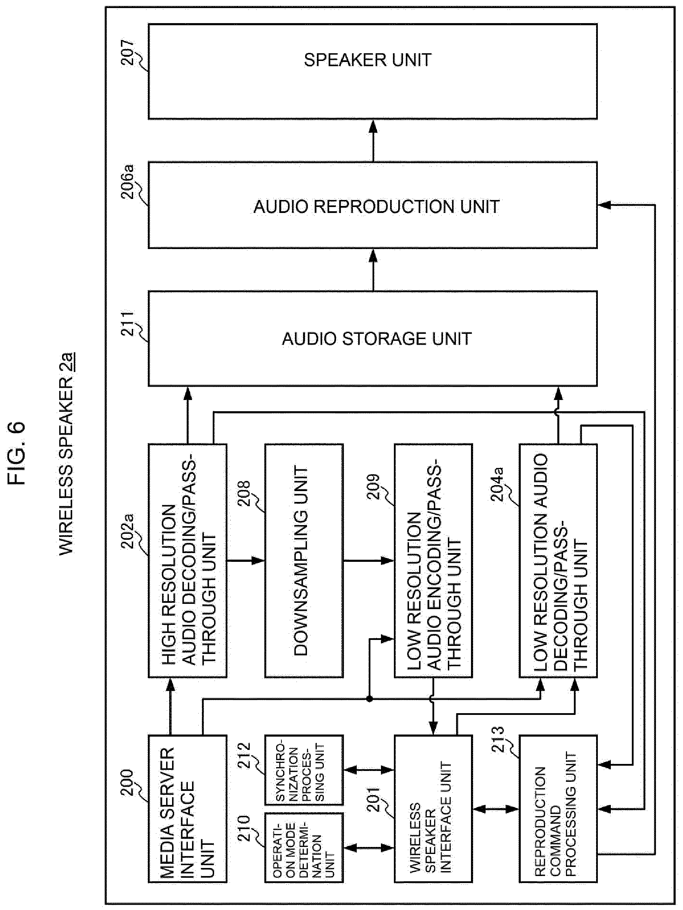

FIG. 6 is a schematic function block diagram of one of the wireless speakers 2a.

The function configuration of the wireless speaker 2a illustrated in FIG. 6 is implemented by, for example, allowing a CPU to load a given program from an auxiliary storage device onto a memory and execute the program on a computer that includes the CPU, the memory, the auxiliary storage device, which is a flash memory, a hard disk drive, or the like, a communication device, which is an NIC, a wireless LAN adapter, a Bluetooth (trademark) adapter, or the like, and a speaker.

As illustrated in FIG. 6, the wireless speaker 2a differs from the wireless speaker 2 that is illustrated in FIG. 2 as one of the wireless speakers 2 according to the first embodiment in that a high resolution audio decoding/pass-through unit 202a, a low resolution audio decoding/pass-through unit 204a, and an audio reproduction unit 206a are used in place of the high resolution audio decoding/pass-through unit 202, the low resolution audio decoding/pass-through unit 204, and the audio reproduction unit 206, in that the buffer units 203 and 205 are omitted, and in that an audio storage unit 211, a synchronization processing unit 212, and a reproduction command processing unit 213 are newly added. The rest of the configuration is the same as that of the wireless speaker 2 that is illustrated in FIG. 2 as one of the wireless speakers 2 according to the first embodiment.

The high resolution audio decoding/pass-through unit 202a decodes high resolution audio data downloaded from the media server 5 via the media server interface unit 200, or allows the downloaded high resolution audio data to pass through, stores the high resolution audio data in the audio storage unit 211, and outputs the high resolution audio data to the downsampling unit 208. The high resolution audio decoding/pass-through unit 202a also outputs a preparation completion notification, which indicates that preparation for audio data reproduction is complete, to the reproduction command processing unit 213.

The low resolution audio decoding/pass-through unit 204a decodes low resolution audio data downloaded from the media server 5 via the media server interface unit 200, or allows the downloaded low resolution audio data to pass through, stores the low resolution audio data in the audio storage unit 211, and outputs a preparation completion notification, which indicates that preparation for audio data reproduction is complete, to the reproduction command processing unit 213. The low resolution audio decoding/pass-through unit 204a also decodes low resolution audio data received from another wireless speaker 2a via the wireless speaker interface unit 201, or allows the received low resolution audio data to pass through, and stores the low resolution audio data in the audio storage unit 211.

The audio reproduction unit 206a follows a reproduction command received from the reproduction command processing unit 213 to read audio data out of the audio storage unit 211 and reproduce the read audio data when a reproduction start time specified by the reproduction command arrives, and outputs a reproduction signal of the audio data as a sound from the speaker unit 207.

The synchronization processing unit 212 executes processing required to synchronize system clocks among the wireless speakers 2a-1 to 2a-3, which are included in the wireless audio system 1a.

The reproduction command processing unit 213 executes processing required to share a reproduction command, which is accompanied by the specification of an audio data reproduction start time, among the wireless speakers 2a-1 to 2a-3 included in the wireless audio system 1a.

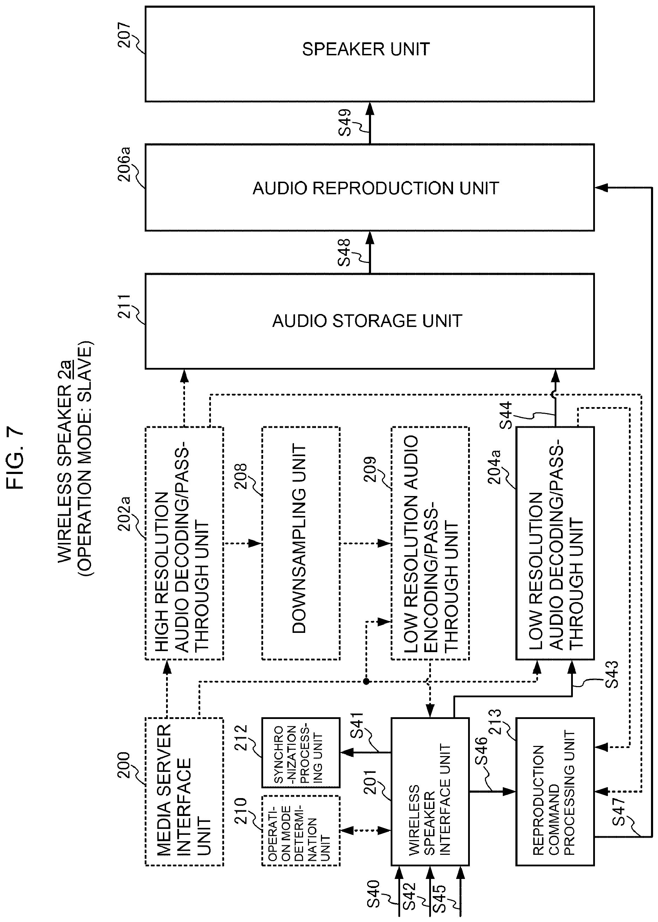

FIG. 7 is a diagram for illustrating the operation of one of the wireless speakers 2a that is set to a slave operation mode.

First, the wireless speaker interface unit 201 receives a reference clock signal from another wireless speaker 2a that is a wireless speaker registered as a master in the operation mode determination unit 210 (S40) . The wireless speaker interface unit 201 outputs the received reference clock signal to the synchronization processing unit 212 (S41). The synchronization processing unit 212 receives the reference clock signal and synchronizes the system clock of its own wireless speaker 2a with the reference clock signal.

The wireless speaker interface unit 201 also receives low resolution audio data from the other wireless speaker 2a registered as the master in the operation mode determination unit 210 (S42). The wireless speaker interface unit 201 outputs the received low resolution audio data to the low resolution audio decoding/pass-through unit 204a (S43).

Next, the low resolution audio decoding/pass-through unit 204a decodes the low resolution audio data input from the wireless speaker interface unit 201, or allows the input low resolution audio data to pass through, and stores the low resolution audio data in the audio storage unit 211 (S44).

Specifically, when the low resolution audio data input from the wireless speaker interface unit 201 is lossy compressed data compressed by AAC or other methods, the low resolution audio decoding/pass-through unit 204a decodes the input low resolution audio data and stores the decoded low resolution audio data in the audio storage unit 211. When the input low resolution audio data is CD-DA or similar uncompressed data, the low resolution audio decoding/pass-through unit 204a allows the low resolution audio data to pass through and stores the low resolution audio data in the audio storage unit 211.

The wireless speaker interface unit 201 receives a reproduction command as well from the other wireless speaker 2a registered as the master in the operation mode determination unit 210 (S45). The wireless speaker interface unit 201 then outputs the received reproduction command to the reproduction command processing unit 213 (S46). The reproduction command processing unit 213 notifies, to the audio reproduction unit 206a, the reproduction command input from the wireless speaker interface unit 201.

The audio reproduction unit 206a receives the notification and waits until a reproduction start time that is specified in the reproduction command notified by the reproduction command processing unit 213. When the reproduction start time arrives, the audio reproduction unit 206a reads low resolution audio data out of the audio storage unit 211 to reproduce the read low resolution audio data (S48), and outputs a reproduction signal of the low resolution audio data from the speaker unit 207 (S49).

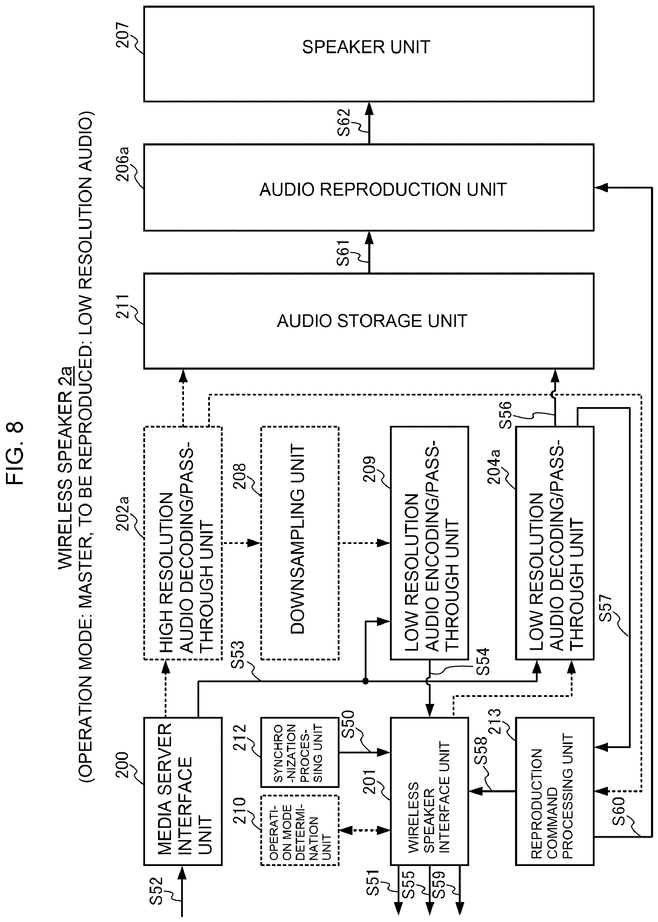

FIG. 8 is a diagram for illustrating how one of the wireless speakers 2a that is set to a master operation mode operates when low resolution audio is downloaded from the media server 5.

First, the synchronization processing unit 212 generates a reference clock signal synchronized with the system clock of its own wireless speaker 2, and outputs the reference clock signal to the wireless speaker interface unit 201 (S50) . The wireless speaker interface unit 201 transmits the reference clock signal input from the synchronization processing unit 212 to the other wireless speakers 2a registered as slaves in the operation mode determination unit 210 (S51).

The media server interface unit 200 downloads low resolution audio data from the media server 5 via the access point 3 and the network 4 (S52). The media server interface unit 200 outputs the downloaded low resolution audio data to the low resolution audio decoding/pass-through unit 204a and the low resolution audio encoding/pass-through unit 209 (S53).

Next, the low resolution audio encoding/pass-through unit 209 encodes the low resolution audio data input from the media server interface unit 200, or allows the input low resolution audio data to pass through, and outputs the low resolution audio data to the wireless speaker interface unit 201 (S54).

Specifically, when the low resolution audio data input from the media server interface unit 200 is CD-DA or similar uncompressed data and encoding is chosen by an operator, the low resolution audio encoding/pass-through unit 209 performs encoding to turn the low resolution audio data into lossy compressed data compressed by AAC or other methods, and outputs the encoded audio data to the wireless speaker interface unit 201. On the other hand, when the low resolution audio data input from the media server interface unit 200 is lossy compressed data compressed by AAC or other methods, the low resolution audio encoding/pass-through unit 209 allows the low resolution audio data to pass through and outputs the low resolution audio data to the wireless speaker interface unit 201.

Next, the wireless speaker interface unit 201 transmits the low resolution audio data input from the low resolution audio encoding/pass-through unit 209 to the other wireless speakers 2a registered as the slaves in the operation mode determination unit 210 (S55) .

Further, the low resolution audio decoding/pass-through unit 204a decodes the low resolution audio data input from the media server interface unit 200, or allows the input low resolution audio data to pass through, and stores the low resolution audio data in the audio storage unit 211 (S56).

Specifically, when the low resolution audio data input from the media server interface unit 200 is lossy compressed data compressed by AAC or other methods, the low resolution audio decoding/pass-through unit 204a decodes the input low resolution audio data and stores the decoded low resolution audio data in the audio storage unit 211. When the input low resolution audio data is CD-DA or similar uncompressed data, the low resolution audio decoding/pass-through unit 204a allows the low resolution audio data to pass through and stores the low resolution audio data in the audio storage unit 211.

Next, the low resolution audio decoding/pass-through unit 204a outputs a preparation completion notification indicating that preparation for audio data reproduction is complete to the reproduction command processing unit 213 (S57). The reproduction command processing unit 213 receives the notification, generates a reproduction command accompanied by the specification of an audio data reproduction start time, and outputs the reproduction command to the wireless speaker interface unit 201 (S58). The wireless speaker interface unit 201 transmits the reproduction command input from the reproduction command processing unit 213 to the other wireless speakers 2a registered as the slaves in the operation mode determination unit 210 (S59).

The reproduction start time specified by the reproduction command is set to a time at least past the time at which preparation for audio data reproduction is completed in the wireless speakers 2a set to the slave operation mode.

Specifically, the reproduction start time is set to a point in time that arrives after the sum of a time required for the preparation and transmission of low resolution audio data in the wireless speaker 2a set to the master operation mode (the sum of an encoding processing time when encoding is performed in the low resolution audio encoding/pass-through unit 209 and a transmission processing time in the wireless speaker interface unit 201) and a time for the reception of the low resolution audio data in the wireless speakers 2a set to the slave operation mode (a reception processing time in the wireless speaker interface unit 201) elapses since the current time.

The reproduction command processing unit 213 also notifies the generated reproduction command to the audio reproduction unit 206a (S60). The audio reproduction unit 206a receives the notification and waits until a reproduction start time that is specified in the reproduction command notified by the reproduction command processing unit 213. When the reproduction start time arrives, the audio reproduction unit 206a reads low resolution audio data out of the audio storage unit 211 to reproduce the read low resolution audio data (S61), and outputs a reproduction signal of the low resolution audio data from the speaker unit 207 (S62) .

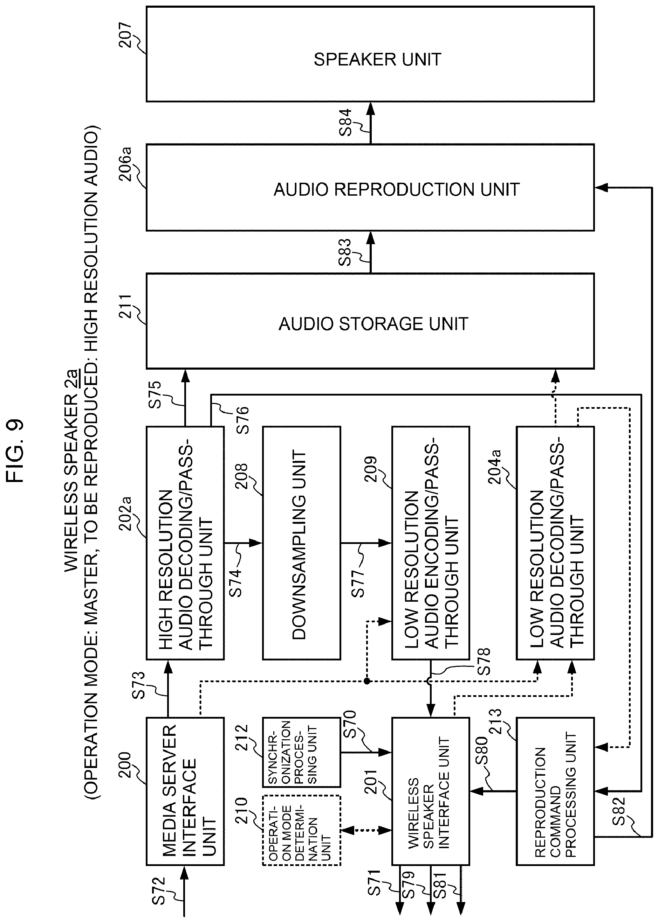

FIG. 9 is a diagram for illustrating how one of the wireless speakers 2a that is set to a master operation mode operates when high resolution audio is downloaded from the media server 5.

First, the synchronization processing unit 212 generates a reference clock signal synchronized with the system clock of its own wireless speaker 2, and outputs the reference clock signal to the wireless speaker interface unit 201 (S70) . The wireless speaker interface unit 201 transmits the reference clock signal input from the synchronization processing unit 212 to the other wireless speakers 2a registered as slaves in the operation mode determination unit 210 (S71).

The media server interface unit 200 downloads high resolution audio data from the media server 5 via the access point 3 and the network 4 (S72) . The media server interface unit 200 outputs the downloaded high resolution audio data to the high resolution audio decoding/pass-through unit 202a (S73).

The high resolution audio encoding/pass-through unit 202a decodes the high resolution audio data input from the media server interface unit 200, or allows the input high resolution audio data to pass through.

Specifically, when the high resolution audio data input from the media server interface unit 200 is losslessly compressed data compressed by FLAC or other methods, the high resolution audio decoding/pass-through unit 202a decodes the high resolution audio data. When the input high resolution audio data is FLAC Uncompressed or similar uncompressed data, the high resolution audio decoding/pass-through unit 202a allows the high resolution audio data to pass through.

The high resolution audio decoding/pass-through unit 202a then outputs the decoded or passed-through high resolution audio data to the downsampling unit 208, and stores the high resolution audio data in the audio storage unit as well (S74 and S75). The high resolution audio decoding/pass-through unit 202a also outputs a preparation completion notification indicating that preparation for audio data reproduction is complete to the reproduction command processing unit 213 (S76).

Next, the downsampling unit 208 downsamples the high resolution audio data input from the high resolution audio decoding/pass-through unit 202a to convert the input data into low resolution audio data (CD-DA or similar uncompressed data), and outputs the low resolution audio data to the low resolution audio encoding/pass-through unit 209 (S77).

Next, the low resolution audio encoding/pass-through unit 209 encodes the low resolution audio data input from the downsampling unit 208, or allows the input low resolution audio data to pass through, and outputs the low resolution audio data to the wireless speaker interface unit 201 (S78).

Specifically, when encoding is chosen by the operator, the low resolution audio encoding/pass-through unit 209 performs encoding to turn the low resolution audio data (CD-DA or similar uncompressed data) input from the downsampling unit 208 into lossy compressed data compressed by AAC or other methods, and outputs the encoded audio data to the wireless speaker interface unit 201. On the other hand, when pass-through is chosen by the operator, the low resolution audio encoding/pass-through unit 209 allows the input low resolution audio data to pass through and outputs the low resolution audio data to the wireless speaker interface unit 201.

Next, the wireless speaker interface unit 201 transmits the low resolution audio data input from the low resolution audio encoding/pass-through unit 209 to the other wireless speakers 2a registered as slaves in the operation mode determination unit 210 (S79) .

The reproduction command processing unit 213 receives the preparation completion notification from the high resolution audio decoding/pass-through unit 202a, generates a reproduction command accompanied by the specification of an audio data reproduction start time, and outputs the reproduction command to the wireless speaker interface unit 201 (S80) . The wireless speaker interface unit 201 transmits the reproduction command input from the reproduction command processing unit 213 to the other wireless speakers 2a registered as the slaves in the operation mode determination unit 210 (S81).

The reproduction start time specified by the reproduction command is set to a time at least past the time at which preparation for audio data reproduction is completed in the wireless speakers 2a set to the slave operation mode.

Specifically, the reproduction start time is set to a point in time that arrives after the sum of a time required for the preparation and transmission of low resolution audio data in the wireless speaker 2a set to the master operation mode (the sum of a downsampling time in the downsampling unit 208, an encoding processing time when encoding is performed in the low resolution audio encoding/pass-through unit 209, and a transmission processing time in the wireless speaker interface unit 201) and a time required for the reception and reproduction preparation of the low resolution audio data in the wireless speakers 2a set to the slave operation mode (the sum of a reception processing time in the wireless speaker interface unit 201 and a decoding processing time when decoding is performed in the low resolution audio decoding/pass-through unit 204a) elapses since the current time.

Further, the reproduction command processing unit 213 notifies the reproduction command to the audio reproduction unit 206a (S82). The audio reproduction unit 206a receives the notification and waits until a reproduction start time that is specified in the reproduction command notified by the reproduction command processing unit 213. When the reproduction start time arrives, the audio reproduction unit 206a reads high resolution audio data out of the audio storage unit 211 to reproduce the read high resolution audio data (S83), and outputs a reproduction signal of the high resolution audio data from the speaker unit 207 (S84) .

This concludes the description of the second embodiment of the present invention.

In the second embodiment, the wireless speakers 2a synchronize their system clocks and then the wireless speaker 2a that is set to the master operation mode transmits a reproduction command accompanied by a reproduction start time to the wireless speakers 2a that are set to the slave operation mode. The wireless speaker 2a that is set to the master operation mode and the wireless speakers 2a that are set to the slave operation mode start reproducing audio data at the reproduction start time specified by the reproduction command.

According to the second embodiment, a gap in reproduction start timing between the wireless speaker 2a set as the master and the wireless speakers 2a set as the slaves can thus be reduced, thereby reducing a gap in reproduction timing between the wireless speakers 2a when audio data of the same tune is to be reproduced on a plurality of wireless speakers 2a.

The present invention is not limited to each of the embodiments described above, and various modifications may be made thereto within the scope of the gist of the present invention.

Forinstance, the buffer units 203 and 205 may be replaced by a shared buffer unit in the first embodiment. The buffering unit in this case is designed so that the buffering time can be varied depending on whether audio data to be buffered is data input from the high resolution audio decoding/pass-through unit 202 or data input from the low resolution audio decoding/pass-through unit 204.

In the second embodiment, the wireless speaker 2a set to a master operation mode acts as a time server to transmit a reference clock signal synchronized with its own system clock, and the wireless speakers 2a set to a slave operation mode receive the reference clock system and synchronize their own system clocks with the reference clock signal, thereby synchronizing the wireless speakers 2a-1 to 2a-3, which are included in the wireless audio system 1a, with one another. The present invention, however, is not limited thereto . The wireless speakers 2a-1 to 2a-3 included in the wireless audio system 1a may be synchronized with one another by, for example, providing a dedicated time server for transmitting a reference clock signal so that each wireless speaker 2a receives the reference clock signal and synchronizes its own system clock with the reference clock signal. Alternatively, the wireless speakers 2a-1 to 2a-3 included in the wireless audio system 1a may be synchronized with one another by transmitting a request for a reference clock signal to a time server from each wireless speaker 2a and providing the reference clock signal from the time server to the wireless speaker 2a that is the sender of the request.

The description given above on the embodiments takes as an example a case in which the wireless speaker 2 or 2a set to a master operation mode downloads audio data of a tune to be reproduced from the media server 5. However, the method of obtaining audio data of a tune to be reproduced is not limited thereto . For instance, the wireless speaker 2 or 2a set to a master operation mode may read audio data of a tune to be reproduced out of a USB memory, a CD-ROM, or other storage media.

The embodiments described above may be modified so that the wireless speaker 2 or 2a set to a master operation mode encrypts audio data and wirelessly transmits the encrypted audio data to the wireless speakers 2 or 2a set to a slave operation mode, and the wireless speakers 2 or 2a set to the slave operation mode receive and decrypt the encrypted audio data. When the first embodiment is modified in this manner, an encryption processing time in the wireless speaker 2 set to the master operation mode and a decryption processing time in the wireless speakers 2 set to the slave operation mode are added to the audio data buffering time in the wireless speaker 2 set to the master operation mode.

The first embodiment and the second embodiment may be combined. For instance, the configuration of the first embodiment may be used to reproduce high resolution audio data while using the configuration of the second embodiment to reproduce low resolution audio data.

### Reference Signs List

1: wireless audio system, 2, 2a, 2-1 to 2-3: wireless speaker, 3: access point, 4: network, 5: media server, 200: media server interface unit, 201: wireless speaker interface unit, 202, 202a: high resolution audio decoding/pass-through unit, 203, 205: buffer unit, 204, 204a:: low resolution audio decoding/pass-through unit, 206, 206a: audio reproduction unit, 207: speaker unit, 208: downsampling unit, 209: low resolution audio encoding/pass-through unit, 210: operation mode determination unit, 211: audio storage unit, 212: synchronization processing unit, 213: reproduction command processing unit

## Claims

1. A wireless audio system, which has a plurality of wireless speakers, and has a configuration in which one of the plurality of speakers serves as a master and rest of the speakers each serve as a slave to reproduce audio data,
wherein the master comprises:
audio data obtaining means for obtaining audio data to be reproduced;
audio data transmission means for wirelessly transmitting the audio data obtained by the audio data obtaining means to the slave;
buffer means for buffering, for a given length of time, the audio data obtained by the audio data obtaining means; and
master-side reproduction output means for reproducing and outputting the audio data buffered for the given length of time by the buffer means,
wherein the slave comprises:
audio data reception means for receiving the audio data transmitted wirelessly from the master; and
slave-side reproduction output means for reproducing and outputting the audio data received by the audio data reception means, and
wherein the buffer means is configured to buffer the audio data for the given length of time, which is a time required for the reception of the audio data by the audio data reception means and for the output of the audio data to the slave-side reproduction output means after the wireless transmission of the audio data by the audio data transmission means.

2. A wireless audio system according to claim 1,
wherein the master further comprises audio data compression means for compressing the audio data obtained by the audio data obtaining means,
wherein the audio data transmission means is configured to wirelessly transmit the audio data compressed by the audio data compression means to the slave,
wherein the slave further comprises audio data decompression means for decompressing the audio data received by the audio data reception means,
wherein the slave-side reproduction output means is configured to reproduce and output the audio data decompressed by the audio data decompression means, and
wherein the buffer means is configured to buffer the audio data for the given length of time, which is a time required for the reception of the audio data by the audio data reception means, for the decompression of the audio data by the audio data decompression means, and for the output of the decompressed audio data to the slave-side reproduction output means after the compression of the audio data by the audio data compression means and the wireless transmission of the compressed audio data by the audio data transmission means.

3. A wireless audio system, which has a plurality of wireless speakers, and has a configuration in which one of the plurality of speakers serves as a master and rest of the speakers each serve as a slave to reproduce audio data,
wherein each of the plurality of wireless speakers comprises synchronization means for synchronizing a system clock with a clock of a time server,
wherein the master comprises:
audio data obtaining means for obtaining audio data to be reproduced;
audio data transmission means for wirelessly transmitting the audio data obtained by the audio data obtaining means to the slave;
reproduction command transmission means for wirelessly transmitting, to the slave, a reproduction command accompanied by specification of a reproduction start time at which reproduction of the audio data obtained by the audio data obtaining is to be started; and
master-side reproduction output means for starting reproduction and output of the audio data obtained by the audio data obtaining means, at the reproduction start time specified by the reproduction command, and
wherein the slave comprises:
audio data reception means for receiving the audio data transmitted wirelessly from the master;
reproduction command reception means for receiving the reproduction command transmitted wirelessly from the master; and
slave-side reproduction output means for starting reproduction and output of the audio data received by the audio data reception means, at the reproduction start time specified by the reproduction command, which is received by the reproduction command reception means.

4. A wireless audio system according to claim 3,
wherein the master further comprises audio data compression means for compressing the audio data obtained by the audio data obtaining means,
wherein the audio data transmission means is configured to wirelessly transmit the audio data compressed by the audio data compression means to the slave,
wherein the slave further includes audio data decompression means for decompressing the audio data received by the audio data reception means, and
wherein the slave-side reproduction output means is configured to start reproduction and output of the audio data decompressed by the audio data decompression means, at the reproduction start time specified by the reproduction command, which is received by the reproduction command reception means.

5. A wireless speaker, which is included in a wireless audio system configured to reproduce audio data on a plurality of wireless speakers, the wireless speaker comprising:
operation mode determination means for determining an operation mode of the wireless speaker so that one of the plurality of wireless speakers serves as a master and rest of the plurality of wireless speakers each serve as a slave;
audio data obtaining means for obtaining audio data to be reproduced when the operation mode is a master operation mode;
audio data transmission means for wirelessly transmitting, when the operation mode is the master operation mode, the audio data obtained by the audio data obtaining means to another of the plurality of wireless speakers that serves as the slave;
buffer means for buffering, when the operation mode is the master operation mode, for a given length of time, the audio data obtained by the audio data obtaining means;
audio data reception means for receiving, when the operation mode is a slave operation mode, the audio data transmitted wirelessly from another of the plurality of wireless speakers that serves as the master; and
reproduction output means for reproducing and outputting the audio data buffered for the given length of time by the buffer means when the operation mode is the master operation mode, and reproducing and outputting the audio data received by the audio data reception means when the operation mode is the slave operation mode,
wherein the buffer means is configured to buffer the audio data for the given length of time, which is a time required for the reception of the audio data by the audio data reception means and for the output of the audio data to the reproduction output means in another of the plurality of wireless speakers that serves as the slave, after the wireless transmission of the audio data by the audio data transmission means.

6. A wireless speaker, which is included in a wireless audio system configured to reproduce audio data on a plurality of wireless speakers, the wireless speaker comprising:
synchronization means for synchronizing a system clock with a clock of a time server;
operation mode determination means for determining an operation mode of the wireless speaker so that one of the plurality of wireless speakers serves as a master and rest of the plurality of wireless speakers each serve as a slave;
audio data obtaining means for obtaining audio data to be reproduced when the operation mode is a master operation mode;
audio data transmission means for wirelessly transmitting, when the operation mode is the master operation mode, the audio data obtained by the audio data obtaining means to another of the plurality of wireless speakers that serves as the slave;
reproduction command transmission means for wirelessly transmitting, when the operation mode is the master operation mode, a reproduction command accompanied by a reproduction start time at which reproduction of the audio data obtained by the audio data obtaining means is to be started, to another of the plurality of wireless speakers that serves as the slave;
audio data reception means for receiving, when the operation mode is a slave operation mode, the audio data transmitted wirelessly from another of the plurality of wireless speakers that serves as the master;
reproduction command reception means for receiving, when the operation mode is the slave operation mode, the reproduction command transmitted wirelessly from another of the plurality of wireless speakers that serves as the master; and
reproduction output means for starting, when the operation mode is the master operation mode, reproduction and output of the audio data obtained by the audio data obtaining means, at the reproduction start time specified by the reproduction command, and starting, when the operation mode is the slave operation mode, reproduction and output of the audio data received by the audio data reception means, at the reproduction start time specified by the reproduction command, which is received by the reproduction command reception means.

7. A program readable by a computer, for causing the computer to function as a wireless speaker included in a wireless audio system configured to reproduce audio data on a plurality of wireless speakers,
wherein the wireless speaker comprises:
operation mode determination means for determining an operation mode of the wireless speaker so that one of the plurality of wireless speakers serves as a master and rest of the plurality of wireless speakers each serve as a slave;
audio data obtaining means for obtaining audio data to be reproduced when the operation mode is a master operation mode;
audio data transmission means for wirelessly transmitting, when the operation mode is the master operation mode, the audio data obtained by the audio data obtaining means to another of the plurality of wireless speakers that serves as the slave;
buffer means for buffering, when the operation mode is the master operation mode, for a given length of time, the audio data obtained by the audio data obtaining means;
audio data reception means for receiving, when the operation mode is a slave operation mode, the audio data transmitted wirelessly from another of the plurality of wireless speakers that serves as the master; and
reproduction output means for reproducing and outputting the audio data buffered for the given length of time by the buffer means when the operation mode is the master operation mode, and reproducing and outputting the audio data received by the audio data reception means when the operation mode is the slave operation mode, and
wherein the buffer means is configured to buffer the audio data for the given length of time, which is a time required for the reception of the audio data by the audio data reception means and for the output of the audio data to the reproduction output means in another of the plurality of wireless speakers that serves as the slave, after the wireless transmission of the audio data by the audio data transmission means.

8. A program readable by a computer, for causing the computer to function as a wireless speaker included in a wireless audio system configured to reproduce audio data on a plurality of wireless speakers,
wherein the wireless speaker comprises:
synchronization means for synchronizing a system clock with a clock of a time server;
operation mode determination means for determining an operation mode of the wireless speaker so that one of the plurality of wireless speakers serves as a master and rest of the plurality of wireless speakers each serve as a slave;
audio data obtaining means for obtaining audio data to be reproduced when the operation mode is a master operation mode;
audio data transmission means for wirelessly transmitting, when the operation mode is the master operation mode, the audio data obtained by the audio data obtaining means to another of the plurality of wireless speakers that serves as the slave;
reproduction command transmission means for wirelessly transmitting, when the operation mode is the master operation mode, a reproduction command accompanied by a reproduction start time at which reproduction of the audio data obtained by the audio data obtaining means is to be started, to another of the plurality of wireless speakers that serves as the slave;
audio data reception means for receiving, when the operation mode is a slave operation mode, the audio data transmitted wirelessly from another of the plurality of wireless speakers that serves as the master;
reproduction command reception means for receiving, when the operation mode is the slave operation mode, the reproduction command transmitted wirelessly from another of the plurality of wireless speakers that serves as the master; and
reproduction output means for starting, when the operation mode is the master operation mode, reproduction and output of the audio data obtained by the audio data obtaining means, at the reproduction start time specified by the reproduction command, and starting, when the operation mode is the slave operation mode, reproduction and output of the audio data received by the audio data reception means, at the reproduction start time specified by the reproduction command, which is received by the reproduction command reception means.
